# FASCICULE DE BREVET EUROPEEN

(11) **EP 2 142 385 B1**
(45) Date de publication et mention de la délivrance du brevet: **13.10.2010**
(21) Numéro de dépôt: 08788153.8
(22) Date de dépôt: 10.04.2008
(51) Int. Cl.: B60B 27/00, B60B 27/02, F16D 65/12

(54) **AGENCEMENT DE TRAIN ROULANT POUR UN VEHICULE AUTOMOBILE**
FAHRWERKANORDNUNG FÜR EIN MOTORFAHRZEUG
RUNNING GEAR ARRANGEMENT FOR A MOTOR VEHICLE

(30) Priorité: 03.05.2007 FR 0754827
(43) Date de publication de la demande: 13.01.2010
(73) Titulaire: Renault SAS, 92100 Boulogne Billancourt (FR)
(72) Inventeur: VENEAU, Jean, F-72370 Ardenay Sur Merize (FR); BERSON, Julien, F-72000 Le Mans (FR)
(86) Numéro de dépôt international: PCT/FR2008/050631
(87) Numéro de publication internationale: WO 2008/135703

(56) Documents cités:
- DE-A1- 3 025 757
- DE-A1- 3 239 802
- US-A- 5 772 285

## Description

L'invention concerne un agencement de train roulant pour un véhicule automobile, comme revélé dans DE 3025757A et correspondant au préambule de la revendication 1.

L'invention concerne plus particulièrement un agencement de train roulant pour un véhicule automobile, du type qui comporte un moyeu sensiblement cylindrique qui est monté tournant par l'intermédiaire d'un roulement dans un porte-fusée qui est accouplé d'une part à un amortisseur du véhicule et d'autre part à un bras inférieur de suspension par l'intermédiaire d'une rotule, ledit moyeu portant d'un côté extérieur au véhicule une jante porteuse d'une roue du véhicule et un disque de frein ventilé, logé sensiblement à l'intérieur de la jante, dans l'épaisseur duquel sont agencés des canaux de ventilation sensiblement radiaux.

On connaît de nombreux agencements de ce type.

Un tel agencement, connu sous le nom de train Mc Pherson, présente de nombreux inconvénients quand au refroidissement du disque.

En effet, sur la plupart des véhicules actuels, les normes de résistance aux chocs et les exigences acoustiques ont considérablement augmenté la masse portant sur les trains roulants. Les nouvelles contraintes en termes de sécurité active et de réduction des distances d'arrêt imposent de monter des disques de frein d'un diamètre supérieur aux disques utilisés de par le passé. Ces disques sont soumis à des pressions de freinage supérieures, et ils sont logés dans des jantes d'un diamètre supérieur.

Lors d'un freinage, les disques de frein actuels se retrouvent soumis à températures bien plus élevées que de par le passé, et il est important d'évacuer rapidement les calories qu'ils reçoivent.

Ceci est d'autant plus capital que les disques de diamètre importants sont plus sujets aux déformations thermiques que les disques de petit diamètre. Une déformation d'un disque de frein peut être préjudiciable au confort de freinage du véhicule en provoquant un phénomène de broutement qui détériore par ailleurs rapidement les plaquettes de frein associées et les disques.

Or, un agencement conventionnel ne permet pas d'évacuer les calories de manière satisfaisante.

En effet, dans un tel agencement, le disque se retrouve enclavé dans la jante. Cette position ne facilite pas la circulation de l'air dans les conduits radiaux du disque, et ce d'autant que la passage de roue du véhicule est une zone d'intenses turbulences.

De surcroît, l'étrier de frein (non représenté) qui coiffe le disque, le bras de direction, le porte-fusée, et le bras inférieur sont autant d'obstacles à la circulation de l'air.

Pour remédier à cet inconvénient, l'invention propose un agencement permettant d'améliorer la circulation de l'air au sein des canaux du disque.

Pour remédier à cet inconvénient l'invention propose agencement du type décrit précédemment, **caractérisé en ce que** le moyeu est sensiblement tubulaire, en ce qu'il comporte au moins un alésage dit extérieur qui débouche du côté extérieur au véhicule et qui s'étend sensiblement au droit du disque et en ce qu'il comporte des conduits radiaux, qui débouchent dans l'alésage et à l'extérieur du moyeu, qui sont agencés sensiblement en regard des canaux radiaux de ventilation du disque, pour alimenter en air frais provenant de l'extérieur du véhicule les canaux de ventilation du disque.

Selon d'autres caractéristiques de l'invention :
- la jante porte sur sa face extérieure un rotor porteur d'aubes formant turbine dont au moins un conduit central communique de manière étanche avec l'orifice débouchant de l'alésage, pour introduire dans l'alésage extérieur de l'air ventilé produit par le mouvement de rotation de la roue,
- le rotor comporte une portée centrale cylindrique qui est emboîtée dans l'alésage central du moyeu et qui est percée d'une pluralité de conduits communiquant chacun avec au moins une aube du rotor,
- le moyeu est monté tournant dans le porte-fusée par l'intermédiaire d'un roulement qui est reçu sur une portée périphérique du moyeu déportée axialement du côté intérieur du véhicule par rapport à l'alésage extérieur du moyeu et au disque,
- le roulement comporte une cage extérieure qui est montée serrée dans le porte-fusée et une cage intérieure qui est monté serrée entre une face d'épaulement du moyeu agencée du côté extérieur au véhicule et un écrou qui est reçu sur une extrémité filetée de la portée périphérique tournée vers le côté intérieur du véhicule,
- le roulement et la portée périphérique sont d'un diamètre élevé supérieur au diamètre de l'alésage,
- l'extrémité du moyeu tournée vers le côté intérieur du véhicule comporte une cavité en forme de bol,
- l'agencement est associé à une roue motrice du véhicule et en ce que la cavité en forme de bol comporte des moyens d'accouplement à un arbre de transmission du véhicule, notamment des pistes destinées à recevoir des galets de joints à billes,
- le sommet d'une tige de l'amortisseur et le centre du corps de la rotule déterminent un axe géométrique de pivotement de l'agencement et :
   - la rotule comporte un corps qui est reçu dans le porte-fusée et une queue qui est accouplée au bras inférieur de suspension,
   - le disque de frein est déporté vers l'axe géométrique de pivotement de l'agencement,
   pour réduire la distance ou déport du centre de gravité de l'agencement à l'axe géométrique de pivotement,
- le porte-fusée porte un flasque d'un diamètre sensiblement correspondant au disque, qui est agencé entre le porte-fusée et le disque pour canaliser les flux d'air issus des extrémités des conduits radiaux du moyeu vers les canaux radiaux du disque.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe d'un agencement selon un état antérieur de la technique ;
- la figure 2 est une vue en coupe d'un agencement selon l'invention.

Dans la description qui va suivre, des chiffres de référence identiques désignent des pièces identiques ou ayant des fonctions similaires.

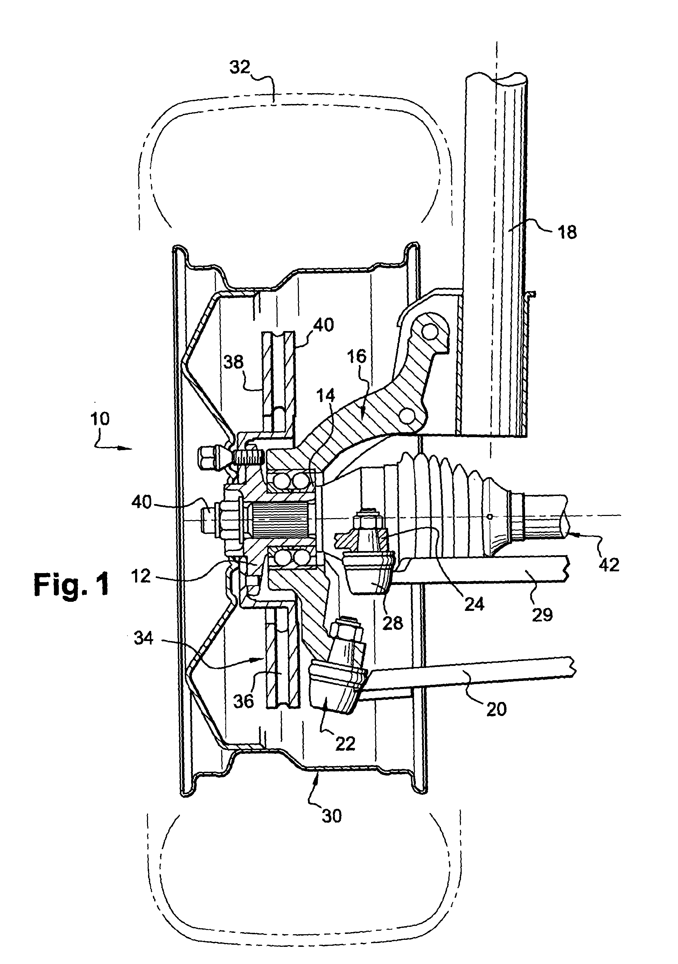

On a représenté à la figure 1 un agencement 10 de train roulant pour un véhicule automobile réalisé conformément à un état antérieur de la technique.

De manière connue, un tel agencement 10 comporte un moyeu 12 sensiblement cylindrique qui est monté tournant par l'intermédiaire d'un roulement 14 dans un porte-fusée 16 qui est accouplé d'une part à un amortisseur 18 du véhicule et d'autre part à un bras inférieur 20 de suspension par l'intermédiaire d'une rotule 22. Le porte fusée 16 comporte aussi un bras 24 qui est accouplé par l'intermédiaire d'une rotule 28 à une biellette 29 de direction.

Le moyeu 12 porte d'un côté extérieur au véhicule une jante 30 porteuse d'une roue 32 du véhicule et un disque 34 de frein ventilé, logé sensiblement à l'intérieur de la jante 30.

De manière connue le disque 34 comporte dans son épaisseur des canaux 36 de ventilation sensiblement radiaux, qui sont agencés entre ses deux faces de friction opposées 38 et 40.

Un tel agencement, connu sous le nom de train Mc Pherson, présente de nombreux inconvénients quand au refroidissement du disque 34.

En effet, sur la plupart des véhicules actuels, les disques de frein actuels se retrouvent soumis à températures bien plus élevées que de par le passé, et il est important d'évacuer rapidement les calories qu'ils reçoivent.

Or, un agencement 10 conventionnel ne permet pas d'évacuer les calories de manière satisfaisante.

En effet, dans un tel agencement 10, le disque 34 se retrouve enclavé dans la jante 30. Cette position ne facilite pas la circulation de l'air dans les conduits radiaux 36 du disque 34, et ce d'autant que le passage de roue du véhicule est une zone d'intenses turbulences.

De surcroît, l'étrier de frein (non représenté) qui coiffe le disque 34, le bras 24 de direction, le porte-fusée 16, et le bras inférieur 20 sont autant d'obstacles à la circulation de l'air.

Dans le cas ou l'agencement 10 est associé à une roue 32 motrice, le moyeu est de surcroît traversé par l'extrémité 40 d'un arbre de transmission 42 qui constitue lui aussi un obstacle à la circulation de l'air.

Pour remédier à cet inconvénient, l'invention propose un agencement 10 permettant d'améliorer la circulation de l'air au sein des canaux 36 du disque 34.

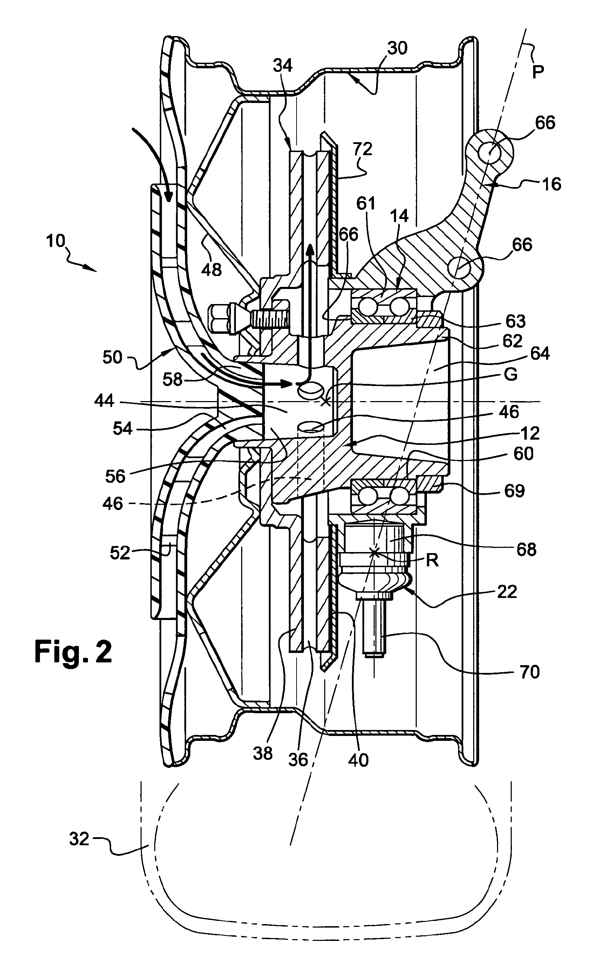

Dans ce but, comme l'illustre la figure 2, l'invention propose un agencement 10 du type décrit précédemment, **caractérisé en ce que** le moyeu 12 est sensiblement tubulaire, en ce qu'il comporte au moins un alésage 44 dit extérieur qui débouche du côté extérieur au véhicule et qui s'étend sensiblement au droit du disque 34 et en ce qu'il comporte des conduits radiaux 46, qui débouchent dans l'alésage 44 et à l'extérieur du moyeu 12, qui sont agencés sensiblement en regard des canaux 36 radiaux de ventilation du disque 34, pour alimenter en air frais provenant de l'extérieur du véhicule les canaux 36 de ventilation du disque 34.

De préférence, la jante 30 porte sur sa face extérieure 48 un rotor 50 porteur d'aubes 52 formant turbine dont au moins un conduit central 54 communique de manière étanche avec l'orifice 56 débouchant de l'alésage 44, pour introduire dans l'alésage 44 extérieur de l'air ventilé produit par le mouvement de rotation de la roue 32.

Plus particulièrement, le rotor 50 comporte une portée 58 centrale cylindrique qui est emboîtée dans l'alésage 44 central du moyeu 12 et qui est percée d'une pluralité de conduits 54 communiquant chacun avec au moins une aube 52 du rotor 50.

Par ailleurs, pour permettre un désenclavement du disque 34 au sein de la jante 30 et donc favoriser la circulation d'air, le moyeu 12 est monté tournant dans le porte-fusée 16 par l'intermédiaire d'un roulement 14 qui est reçu sur une portée périphérique 60 du moyeu 12 qui est déportée axialement du côté intérieur du véhicule par rapport à l'alésage extérieur 44 du moyeu 12 et au disque 34.

A cet effet, le roulement 14 comporte une cage extérieure 61 qui est montée serrée dans le porte-fusée 16 et une cage intérieure 63 qui est monté serrée entre une face d'épaulement 66 du moyeu 12 agencée du côté extérieur au véhicule et un écrou 69 qui est reçu sur une extrémité filetée de la portée périphérique 60 tournée vers le côté intérieur du véhicule.

Dans le mode réalisation préféré de l'invention, le roulement 14 et la portée périphérique 60 sont d'un diamètre élevé supérieur au diamètre de l'alésage 44 extérieur. Cette configuration permet de garantir une rigidité suffisante du moyeu 12 et un guidage en rotation précis de celui-ci par le roulement 14.

Dans le mode réalisation préféré de l'invention, l'extrémité 62 du moyeu 12 tournée vers le côté intérieur du véhicule comporte une cavité 64 en forme de bol. Cette cavité permet d'alléger le moyeu 12 et de favoriser ses caractéristiques inertielles.

Dans le mode de réalisation préféré de l'invention, l'agencement est plus spécifiquement associé à une roue 32 motrice du véhicule et la cavité 64 est destinée à comporter des moyens d'accouplement à un arbre de transmission (non représenté) du véhicule. Par exemple, ces moyens d'accouplement peuvent comporter des pistes radiales destinées à recevoir des billes de joints "LOBRO" connus de l'état de technique.

De manière connue, le sommet (non représenté) d'une tige de l'amortisseur 18 et le centre "R" du corps 68 de la rotule 22 déterminent un axe géométrique "P" de pivotement de l'agencement 10.

Dans cette configuration, la rotule 22 comporte avantageusement un corps 68 qui est reçu dans le porte-fusée 16 et une queue 70 qui est accouplée au bras inférieur de suspension, et le disque 34 de frein est déporté vers ledit axe "P" géométrique, pour réduire la distance ou déport du centre "G" de gravité de l'agencement à l'axe "P"géométrique de pivotement.

Enfin, le porte-fusée 16 porte un flasque 72 d'un diamètre sensiblement correspondant au disque 34, qui est agencé entre le porte-fusée 16 et le disque 34 pour canaliser les flux d'air issus des extrémités des conduits radiaux 46 du moyeu 12 vers les canaux 36 radiaux du disque 34.

L'invention permet donc de proposer un agencement 10 de trin roulant améliorant considérablement le refroidissement d'un disque de frein 34.

## Revendications

1. Agencement (10) de train roulant pour un véhicule automobile, du type qui comporte un moyeu (12) sensiblement cylindrique qui est monté tournant par l'intermédiaire d'un roulement (14) dans un porte-fusée (16) qui est accouplé d'une part à un amortisseur (18) du véhicule et d'autre part à un bras inférieur (20) de suspension par l'intermédiaire d'une rotule (22), ledit moyeu (12) portant d'un côté extérieur au véhicule une jante (30) porteuse d'une roue (32) du véhicule et un disque (34) de frein ventilé, logé sensiblement à l'intérieur de la jante (30), dans l'épaisseur duquel sont agencés des canaux (36) de ventilation sensiblement radiaux, le moyeu (12) étant sensiblement tubulaire, comportant au moins un alésage (44) dit extérieur qui débouche du côté extérieur au véhicule et qui s'étend sensiblement au droit du disque (34) et comportant des conduits radiaux (46), qui débouchent dans l'alésage (44) et à l'extérieur du moyeu (12), qui sont agencés sensiblement en regard des canaux radiaux (36) de ventilation du disque (34), pour alimenter en air frais provenant de l'extérieur du véhicule les canaux (36) de ventilation du disque (34),
**caractérisé en ce que** la jante (30) porte sur sa face extérieure (48) un rotor (50) porteur d'aubes (52) formant turbine dont au moins un conduit central (54) communique de manière étanche avec l'orifice (56) débouchant de l'alésage (44), pour introduire dans l'alésage extérieur (44) de l'air ventilé produit par le mouvement de rotation de la roue (32).

2. Agencement (10) selon la revendication précédente, **caractérisé en ce que** le rotor (50) comporte une portée centrale (58) cylindrique qui est emboîtée dans l'alésage (44) central du moyeu (12) et qui est percée d'une pluralité de conduits (54) communiquant chacun avec au moins une aube (52) du rotor (50).

3. Agencement (10) selon l'une des revendications précédentes, **caractérisé en ce que** le moyeu (12) est monté tournant dans le porte-fusée (16) par l'intermédiaire d'un roulement (16) qui est reçu sur une portée (60) périphérique du moyeu (12) déportée axialement du côté intérieur du véhicule par rapport à l'alésage extérieur (44) du moyeu (12) et au disque (34).

4. Agencement (10) selon la revendication précédente, **caractérisé en ce que** le roulement (14) comporte une cage (62) extérieure qui est montée serrée dans le porte-fusée (16) et une cage intérieure (64) qui est monté serrée entre une face d'épaulement (66) du moyeu (12) agencée du côté extérieur au véhicule et un écrou (69) qui est reçu sur une extrémité filetée de la portée (60) périphérique tournée vers le côté intérieur du véhicule.

5. Agencement (10) selon la revendication précédente **caractérisé en ce que** le roulement (14) et la portée périphérique (60) sont d'un diamètre élevé supérieur au diamètre de l'alésage (44).

6. Agencement (10) selon la revendication précédente, **caractérisé en ce que** l'extrémité (62) du moyeu (12) tournée vers le côté intérieur du véhicule comporte une cavité (64) en forme de bol.

7. Agencement (10) selon la revendication précédente, **caractérisé en ce qu'**il est associé à une roue motrice (32) du véhicule et **en ce que** la cavité (64) en forme de bol comporte des moyens d'accouplement à un arbre de transmission du véhicule, notamment des pistes destinées à recevoir des galets de joints à billes.

8. Agencement (10) selon l'une des revendications précédentes, **caractérisé en ce que** le sommet d'une tige de l'amortisseur (18) et le centre (R) du corps (68) de la rotule (22) déterminent un axe géométrique (P) de pivotement de l'agencement (10) et **en ce que** :
- la rotule (22) comporte un corps (68) qui est reçu dans le porte-fusée (16) et une queue (70) qui est accouplée au bras inférieur de suspension,
- le disque (34) de frein est déporté vers l'axe (P) géométrique de pivotement de l'agencement,
pour réduire la distance ou déport du centre (G) de gravité de l'agencement à l'axe (P) géométrique de pivotement.

9. Agencement (10) selon l'une des revendications précédentes, **caractérisé en ce que** le porte-fusée (16) porte un flasque (72) d'un diamètre sensiblement correspondant au disque (34), qui est agencé entre le porte-fusée (16) et le disque (14) pour canaliser les flux d'air issus des extrémités des conduits radiaux (46) du moyeu (12) vers les canaux (36) radiaux du disque (34).

## Claims

1. Running gear arrangement (10) for a motor vehicle, of the type comprising a substantially cylindrical hub (12) which is mounted such that it can rotate via a rolling bearing (14) in a stub axle (16) which is coupled, on the one hand, to a shock absorber (18) of the vehicle, and on the other hand, to a suspension lower link (20) by a ball joint (22), the said hub (12) carrying, on an outboard side of the vehicle a rim (30) bearing a wheel (32) of the vehicle and a ventilated brake disc (34) housed substantially inside the rim (30), and in the thickness of which disc there are substantially radial ventilation ducts (36), the hub (12) being substantially tubular comprising at least one bore (44) known as the exterior bore which opens onto the outboard side of the vehicle and extends substantially in line with the disc (34) and comprises radial passages (46) which open into the bore (44) and to the outboard side of the hub (12) and are arranged substantially facing the radial ventilation ducts (36) of the disc (34) so as to supply the ventilation ducts (36) of the disc (34) with fresh air from outside the vehicle,
**characterized in that** on its exterior face (48) the rim (30) carries a rotor (50) bearing blades (52) to form a fan wheel at least one central passage (54) of which communicates fluidtightly with the open orifice (56) of the bore (44) so as to introduce blown air produced by the rotational movement of the wheel (32) into the exterior bore (44).

2. Arrangement (10) according to the preceding claim, **characterized in that** the rotor (50) has a cylindrical central bearing surface (58) which is pushed into the central bore (44) of the hub (12) and which is pierced with a plurality of passages (54) each communicating with at least one blade (52) of the rotor (50).

3. Arrangement (10) according to one of the preceding claims, **characterized in that** the hub (12) is mounted such that it can rotate in the stub axle (16) via a rolling bearing (16) which is housed on a peripheral bearing (60) of the hub (12) that is axially offset towards the inboard side of the vehicle with respect to the exterior bore (44) of the hub (12) and with respect to the disc (34).

4. Arrangement (10) according to the preceding claim, **characterized in that** the rolling bearing (14) has an exterior cage (62) which is fitted tightly into the stub axle (16) and an interior cage (64) which is fitted tightly between a shoulder (66) of the hub (12) arranged on the outboard side of the vehicle and a nut (69) held on a threaded end of the peripheral bearing surface (60) that faces towards the inboard side of the vehicle.

5. Arrangement (10) according to the preceding claim, **characterized in that** the rolling bearing (14) and the peripheral bearing surface (60) are of a large diameter greater than the diameter of the bore (44).

6. Arrangement (10) according to the preceding claim, **characterized in that** the end (62) of the hub (12) that faces towards the inboard side of the vehicle comprises a bowl-shaped cavity (64).

7. Arrangement (10) according to the preceding claim, **characterized in that** it is associated with a driven wheel (32) of the vehicle, and **in that** the bowl-shaped cavity (64) contains means of connection to a transmission shaft of the vehicle, notably grooves intended to accommodate the rolling areas of multi-ball plunge joints.

8. Arrangement (10) according to one of the preceding claims, **characterized in that** the top of a rod of the shock absorber (18) and the centre (R) of the body (68) of the ball joint (22) determine a geometric axis (P) of pivoting arrangement (10) and **in that**:
- the ball joint (22) comprises a body (68) which is housed in the stub axle (16) and a shank (70) which is coupled to the suspension lower link,
- the brake disc (34) is offset towards the geometric axis (P) of pivoting of the arrangement,
so as to reduce the distance or offset between the centre of gravity (G) of the arrangement and the geometric axis (P) of pivoting.

9. Arrangement (10) according to one of the preceding claims, **characterized in that** the stub axle (16) carries a plate (72) of a diameter substantially corresponding to the disc (34), which is interposed between the stub-axle (16) and the disc (14) to channel air flows from the ends of the radial passages (46) of the hub (12) towards the radial ducts (36) in the disc (34).

## Patentansprüche

1. Fahrwerkanordnung (10) für ein Kraftfahrzeug jener Art, die eine im Wesentlichen zylindrische Nabe (12) umfasst, die mittels eines Wälzlagers (14) drehbar in einem Achsschenkelträger (16) montiert ist, der einerseits mit einem Dämpfer (18) des Fahrzeugs und andererseits mittels eines Kugelkopfgelenks (22) mit einem unteren Aufhängungslenker (20) verbunden ist, wobei die Nabe (12) auf einer Außenseite des Fahrzeugs eine ein Rad (32) des Fahrzeugs tragende Felge (30) und eine belüftete Bremsscheibe (34) stützt, die im Wesentlichen im Inneren der Felge (30) angeordnet ist, wobei in ihrer Dicke im Wesentlichen radiale Belüftungskanäle (36) angeordnet sind, wobei die Nabe (12) im Wesentlichen röhrenförmig ist und mindestens eine so genannte Außenbohrung (44) aufweist, die in der Außenseite des Fahrzeugs mündet und sich im Wesentlichen senkrecht zur Scheibe (34) erstreckt, sowie radiale Leitungen (46) aufweist, die in der Bohrung (44) und auf der Außenseite der Nabe (12) münden und im Wesentlichen gegenüber den radialen Kanälen (36) der belüfteten Scheibe (34) angeordnet sind, um den Belüftungskanälen (36) der Scheibe (34) von außen stammende Frischluft zuzuführen,
**dadurch gekennzeichnet, dass** die Felge (30) auf ihrer Außenseite (48) einen Rotor (50) stützt, der Schaufeln (52) trägt, die eine Turbine bilden, von der mindestens eine mittlere Leitung (54) dicht mit der in der Bohrung (44) mündenden Öffnung (56) verbunden ist, um durch die Drehbewegung des Rads (32) erzeugte ausströmende Luft in die Außenbohrung (44) einzuleiten.

2. Anordnung (10) nach dem vorhergehenden Anspruch, **dadurch gekennzeichnet, dass** der Rotor (50) eine zylindrische mittlere Lagerung (58) aufweist, die in die mittlere Bohrung (44) der Nabe (12) eingreift und durch die mehrere Leitungen (54) ausgebildet sind, die jeweils mit mindestens einer Schaufel (52) des Rotors (50) in Verbindung stehen.

3. Anordnung (10) nach einem der vorhergehenden Ansprüche, **dadurch gekennzeichnet, dass** die Nabe (12) mittels eines Wälzlagers (14) drehbar in dem Achsschenkelträger (16) montiert ist, das in einer Umfangslagerung (60) der Nabe (12) aufgenommen ist, die auf der Innenseite des Fahrzeugs bezüglich der Außenbohrung (44) der Nabe (12) und der Scheibe (34) axial verschoben ist.

4. Anordnung (10) nach dem vorhergehenden Anspruch, **dadurch gekennzeichnet, dass** das Wälzlager (14) einen Außenkäfig (62), der in dem Achsschenkelträger (16) fest eingespannt ist, und einen Innenkäfig (64), der zwischen einer Schulterfläche (66) der Nabe (12), die auf der Außenseite des Fahrzeugs angeordnet ist, und einer Mutter (69), die in einem zur Innenseite des Fahrzeugs weisenden Gewindeende der Umfangslagerung (60) aufgenommen ist, fest eingespannt ist.

5. Anordnung (10) nach dem vorhergehenden Anspruch, **dadurch gekennzeichnet, dass** das Wälzlager (14) und die Umfangslagerung (60) einen großen Durchmesser aufweisen, der größer ist als der Durchmesser der Bohrung (44).

6. Anordnung (10) nach dem vorhergehenden Anspruch, **dadurch gekennzeichnet, dass** das zur Innenseite des Fahrzeugs weisende Ende (62) der Nabe (12) einen schalenförmigen Hohlraum (64) aufweist.

7. Anordnung (10) nach dem vorhergehenden Anspruch, **dadurch gekennzeichnet, dass** sie einem Antriebsrad (32) des Fahrzeugs zugeordnet ist und dass der schalenförmige Hohlraum (64) Mittel zur Verbindung mit einer Kraftübertragungswelle des Fahrzeugs, insbesondere Laufbahnen zur Aufnahme von Kugelgelenkrollen, aufweist.

8. Anordnung (10) nach einem der vorhergehenden Ansprüche, **dadurch gekennzeichnet, dass** der Kopf einer Dämpferstange (18) und die Mitte (R) des Körpers (68) des Kugelkopfgelenks (22) eine geometrische Schwenkachse (P) der Anordnung (10) definieren und dass
- das Kugelkopfgelenk (22) einen Körper (68), der in dem Achsschenkelträger (16) aufgenommen ist, und einen Schaft (70), der mit dem unteren Aufhängungslenker verbunden ist, aufweist,
- die Bremsscheibe (34) zur geometrischen Schwenkachse (P) der Anordnung verschoben ist, um den Abstand oder den Versatz des Schwerpunkts (G) der Anordnung zur geometrischen Schwenkachse (P) zu verkleinern.

9. Anordnung (10) nach einem der vorhergehenden Ansprüche, **dadurch gekennzeichnet, dass** der Achsschenkelträger (16) einen Flansch (72) mit einem der Scheibe (34) im Wesentlichen entsprechenden Durchmesser stützt, der zwischen dem Achsschenkelträger (16) und der Scheibe (34) angeordnet ist, um von den Enden der radialen Leitungen (46) der Nabe (12) kommende Luftströme zu den radialen Kanälen (36) der Scheibe (34) zu leiten.
